# EUROPÄISCHE PATENTSCHRIFT

(11) **EP 1 140 545 B1**
(45) Veröffentlichungstag und Bekanntmachung des Hinweises auf die Patenterteilung: **10.12.2003**
(21) Anmeldenummer: 00987102.1
(22) Anmeldetag: 09.11.2000
(51) Int. Cl.: B60K 26/04, B60K 20/04

(54) **BEFESTIGUNG EINER GETRIEBESCHALTVORRICHTUNG IN EINEM KRAFTFAHRZEUG**
MOUNTING OF A GEAR-SHIFT IN A MOTOR VEHICLE
FIXATION D'UN DISPOSITIF DE CHANGEMENT DE VITESSES DANS UN VEHICULE AUTOMOBILE

(30) Priorität: 09.11.1999 DE 19953958
(43) Veröffentlichungstag der Anmeldung: 10.10.2001
(73) Patentinhaber: ZF Lemförder Metallwaren AG, 49441 Lemförde (DE)
(72) Erfinder: MEYER, Jörg, 49419 Wagenfeld (DE)
(86) Internationale Anmeldenummer: DE0003921
(87) Internationale Veröffentlichungsnummer: WO01034421

(56) Entgegenhaltungen:
- EP-A- 0 704 336
- US-A- 3 665 776
- US-A- 4 527 913
- US-A- 5 865 066
- US-A- 5 992 264

## Beschreibung

Die Erfindung betrifft ein Kraftfahrzeug nach dem Oberbegriff des Patentanspruches 1.

Im modernen Automobilbau werden zunehmend Systemlösungen eingesetzt, das bedeutet die Lieferung und den Einbau kompletter Vorrichtungen in das zu produzierende Kraftfahrzeug. Dabei ist es von besonderer Bedeutung, kostbare Montagezeit zu sparen. Bislang wurden Schaltvorrichtungen für Kraftfahrzeuge durch eine Halterung in Form einer Verschraubung mit der Kraftfahrzeugkarosserie verbunden. Der hierzu erforderliche Montageaufwand erhöht die Herstellungskosten nicht unerheblich. Darüber hinaus besteht ein weiteres Problem bei bekannten Ausführungen darin, daß die Gehäuse der Schaltvorrichtungen zumeist aus Kunststoffbestehen, der bei einer Verschraubung oft nicht die erforderlichen Festigkeit aufweist, sodaß dies entweder zu einer unbefriedigenden Einbauqualität führt oder zusätzliche Aufwendungen für Verstärkungen des Verschraubungsbereiches notwendig werden.

Aus der US 4,527,913 ist ein Kraftfahrzeug mit einer ortsfest in dem Kraftfahrzeug befestigten Schaltvorrichtung zur Betätigung des Zahnräderwechselgetriebes bekannt, bei der die Verbindung zwischen dem Kraftfahrzeug und der Schaltvorrichtung eine Halterung aufweist. Diese Halterung ist als eine Rastverbindung ausgeführt, bei der lösbar ineinandergreifende Rastelemente miteinander in Eingriff gebracht werden, die somit eine Befestigung der Schaltvorrichtung in dem Kraftfahrzeug ermöglichen. Die Rastverbindung besteht nach der Druckschrift aus Stiften am Schaltungsgehäuse, die in korrespondierende Clips eingerastet werden können.

Der Erfindung liegt die technische Problemstellung zugrunde, eine Verbindungsmöglichkeit zwischen dem Kraftfahrzeug und einer Schaltvorrichtung zu schaffen, die bei geringem Montageaufwand festsitzend und toleranzoptimiert ist.

Gelöst wird diese Aufgabenstellung mit den kennzeichnenden Merkmalen des Patentanspruches 1. Ausgestaltungen der Erfindung sind Gegenstand der Unteransprüche.
Danach wird vorgeschlagen, die Verbindung zwischen dem Kraftfahrzeug und der Schaltvorrichtung zur Betätigung des Zahnräderwechselgetriebes mit einer Halterung auszustatten, die zumindest aus wenigstens einer Arretiervorrichtung mit je einer Rastverbindung besteht. Die Rastvorrichtung kann dabei ihrerseits zwei lösbar ineinandergreifende, komplementäre Rastelemente aufweisen.
Eine weitere Lösungsmöglichkeit der eingangs genannten technischen Problemstellung wird darin gesehen, daß die Halterung aus einer Arretiervorrichtung und mindestens einer Fixiervorrichtung zur lagegenauen Positionierung der Schaltvorrichtung besteht. Eine jede Fixiervorrichtung kann sich dabei jeweils aus einer Buchse und einer komplementär, in diese Buchse einsetzbaren Muffe zusammensetzen.

Entsprechend ener weiteren Ausgestaltung der Erfindung kann das erste Rastelement eine im Querschnitt gesehen keilförmige Rampe und das zweite Rastelement eine aus zumindest bereichsweise federnd elastisch verformbarem Material bestehende Lasche sein.
Wie eingangs bereits ausgeführt, weisen Schaltvorrichtungen zumeist ein aus Kunststoff bestehendes Gehäuse auf. Bei der Herstellung dieses Gehäuses lassen sich die unterschiedlichsten Elemente in einem Arbeitsgang einfach und kostengünstig anformen. So ist es sinnvoll, bei der Gehäuseherstellung beispielsweise die Lasche gleich mit an dem Gehäuse anzuformen.
Diese kann im Querschnitt gesehen annähernd eine L-Form aufweisen, wobei der Bereich aus federnd elastisch verformbarem Material in einen verstärkten und rechtwinklig zu dem ersten Bereich verlaufenden Griffbereich übergeht, der eine dem ersten Rastelement zugeordnete Rastfläche aufweist.

An dieser Rastfläche kann ein Dämfungselement vorgesehen werden, das schwingungsisolierend wirkt.

Die Lasche kann jedoch auch in das Gehäuse verschiebbar ausgeführt werden, was allerdings die einteilige Ausführung verhindert. Gedacht ist dabei an eine federkraftbelastete Ausführung, wobei die Feder gleichzeitig die Abstützwirkung an der Rampe unterstützt.

Werden mehrere Arretiervorrichtungen an der Schaltvorrichtung vorgesehen, so können diese gleichzeitig zur Lagepositionierung in Form einer Fixiervorrichtung dienen.

Gemäß einer vorteilhaften Ausführung der Erfindung werden eine Arretiervorrichtung und mehrere Fixiervorrichtungen an der Schaltvorrichtung des erfindungsgemäßen Kraftfahrzeuges eingesetzt.
Dabei kann die Buchse einer jeden Fixiervorrichtung begrenzt elastisch ausgeführt sein und ferner im Querschnitt gesehen annähernd eine U-Form oder eine V-Form aufweisen.

Eine einfache Ausführung besteht beispielsweise darin, die Muffe insgesamt aus Elastomermaterial bzw. Gummi zu fertigen oder zumindest eine Elastomer- bzw. Gummibeschichtung der Muffe vorzusehen.

Dadurch wird in einfacher Weise ein Toleranzausgleich und eine Schwingungsisolierung erreicht. Zudem kann eine Montageerleichterung bewirkt werden.

Ein Ausführungsbeispiel der Erfindung wird nachstehend unter Bezugnahme auf die Zeichnungen näher erläutert. Es zeigen:

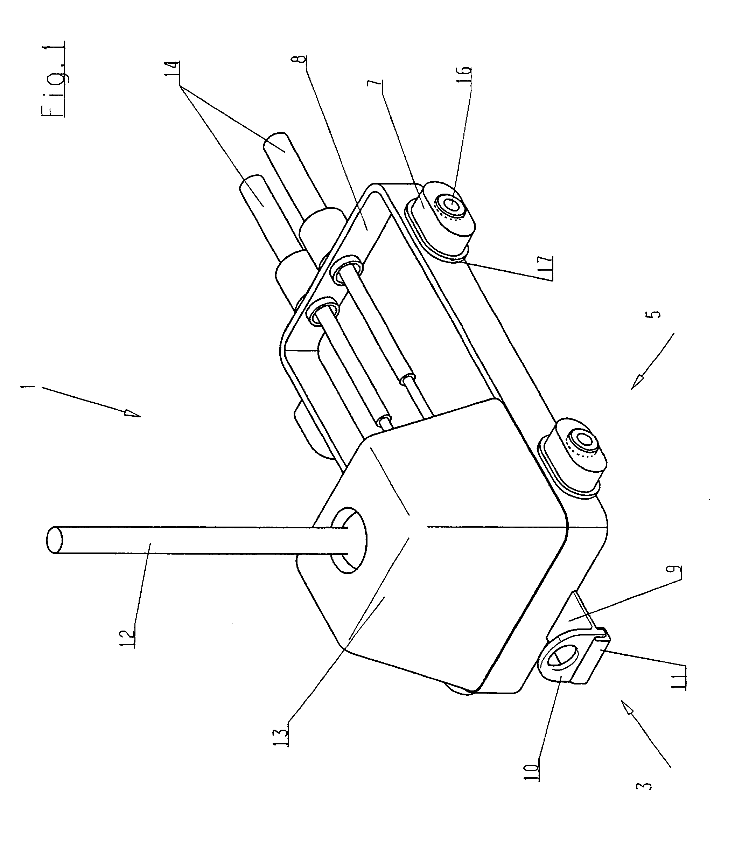

- Figur 1:: eine dreidimensionale Ansicht einer Schaltvorrichtung zum Einbau in ein erfindungsgemäßes Kraftfahrzeug,

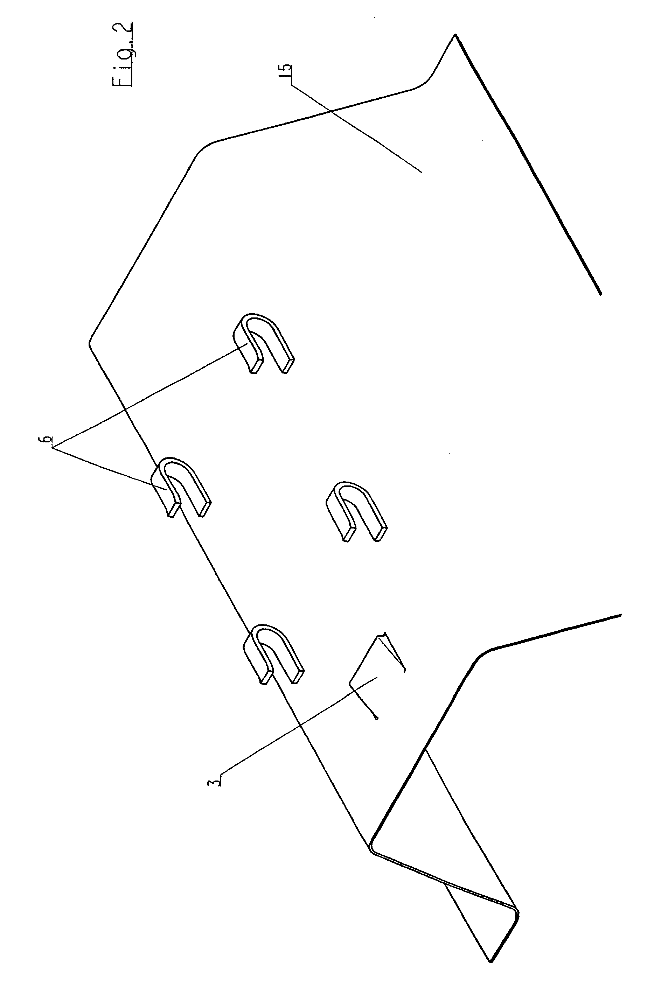

- Figur 2:: den Tunnel eines erfindungegemäßen Kraftfahrzeuges,

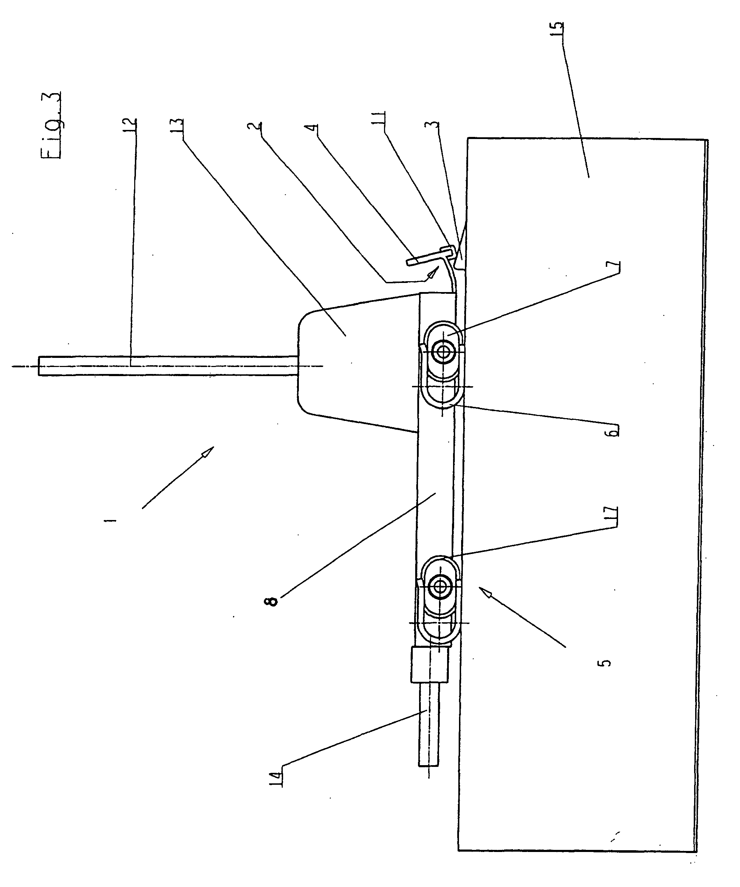

- Figur 3:: eine Seitenansicht einer Schaltvorrichtung eines erfindungsgemäßen Kraftfahrzeuges
und

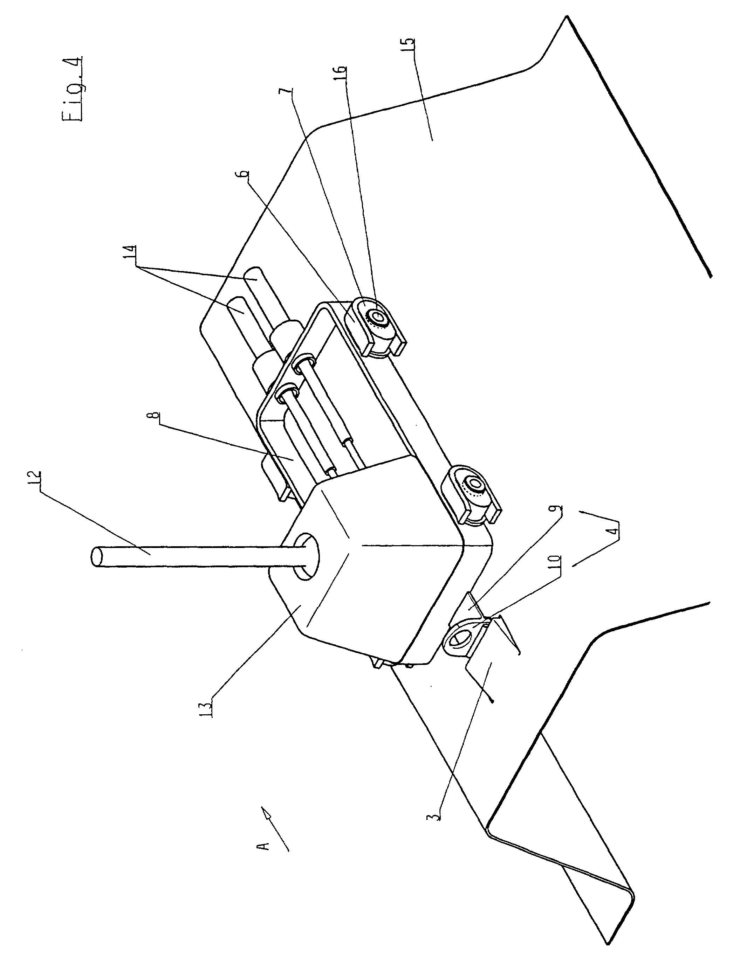

- Figur 4:: eine dreidimensionale Darstellung der Verbindung einer Schaltvorrichtung mit dem Tunnel eines erfindungsgemäßen Kraftfahrzeuges.

In den Figuren ist beispielhaft ein erfindungsgemäßes Kraftfahrzeug mit einer ortsfest in dem Kraftfahrzeug befestigten Schaltvorrichtung, die insgesamt mit 1 bezeichnet wurde und zur Betätigung des Zahnräderwechselgetriebes dient dargestellt. Diese enthält einen Wählhebel 12, der in an sich bekannter Weise in einem Dom 13 des Gehäuses 8 beweglich gelagert ist. Zur Übertragung der Wähl- und Schaltbewegungen dienen Bowdenzüge 14.

Die Anbringung der Schaltvorrichtung an dem Kraftfahrzeug erfolgt mittels einer mehrteiligen Halterung. Die Halterung setzt sich bei dem Ausführungsbeispiel aus einer Arretiervorrichtung 2 und vier Fixiervorrichtungen 5 zusammen, wobei die Arretiervorrichtung 2 aus einer Rastverbindung mit zwei lösbar ineinander-greifenden, komplementären Rastelementen 3, 4 besteht und die Fixiervorrichtungen 5 je eine Buchse 6 und eine komplementäre, in diese Buchse einsetzbare Muffe 7 aufweisen. Das erste Rastelement 3 ist dabei eine im Querschnitt gesehen keilförmige Rampe und das zweite Rastelement 4 eine aus zumindest bereichsweise federnd elastisch verformbarem Material bestehende Lasche 4, die an dem aus Kunststoff bestehenden Gehäuse 8 angeformt ist.
Die Lasche 4 ist im Querschnitt gesehen annähernd L-förmig, wobei der untere, etwa horizontale Bereich 9 aus federnd elastisch verformbarem Material besteht und in einen verstärkten und rechtwinklig zu dem ersten Bereich verlaufenden Griffbereich 10 übergeht, der eine dem ersten Rastelement 3 zugeordnete Rastfläche aufweist.

Diese Rastfläche ist vorliegend mit einem Dämfungselement 11 versehen. Sie stützt sich gegen die Rampe 3 ab.
Die begrenzt elastisch ausgeführten Buchsen 6 der Fixiervorrichtung 5 sind im Querschnitt gesehen annähernd U-förmig und werden auf dem Tunnel 15 des Kraftfahrzeuges befestigt. Die an dem Gehäuse 8 der Schaltvorrichtung 1 angebrachten Muffen 7 bestehen aus Gummi und werden mittels eines Nietes 16 an dem Gehäuse 8 befestigt. Zur besseren Anlage und zur Erleichterung der Montage der Muffen 7 wird eine Auflage 17 zwischen der Muffe 7 und dem Gehäuse 8 vorgesehen, die jedoch auch einteilig mit dem Gehäuse ausgebildet werden kann.

Die Schaltvorrichtung wird durch ein Einschieben der Muffen 7 in die Buchsen 6 bewirkt, bis die Lasche 4 hinter der Rampe 3 zum Eingriff kommt.
Aufwendige Verschraubungen können dabei völlig entfallen.

### Bezugszeichenliste:

- 1: Schaltvorrichtung
- 2: Arretiervorrichtung
- 3: Rastelement
- 4: Rastelement
- 5: Fixiervorrichtung
- 6: Buchse
- 7: Muffe
- 8: Gehäuse
- 9: Bereich
- 10: Griffbereich
- 11: Dämpfungselement
- 12: Wählhebel
- 13: Dom
- 14: Bowdenzug
- 15: Tunnel
- 16: Niet
- 17: Auflage

## Patentansprüche

1. Kraftfahrzeug mit einer ortsfest in dem Kraftfahrzeug befestigten Schaltvorrichtung (1) zur Betätigung eines Zahnräderwechselgetriebes, wobei die Verbindung zwischen dem Kraftfahrzeug und der Schaltvorrichtung (1) eine Halterung aufweist,
**dadurch gekennzeichnet, dass**
die Halterung aus wenigstens einer Arretiervorrichtung (2) mit je einer Rastverbindung aus zwei lösbar ineinandergreifenden, komplementären Rastelementen (3, 4) und mindestens einer Fixiervorrichtung (5) mit je einer Buchse (6) und einer komplementären, in diese Buchse einsetzbaren Muffe (7) besteht.

2. Kraftfahrzeug nach Anspruch 1,
**dadurch gekennzeichnet, daß**
das erste Rastelement (3) eine im Querschnitt gesehen keilförmige Rampe und das zweite Rastelement (4) eine aus zumindest bereichsweise federnd elastisch verformbarem Material bestehende Lasche ist.

3. Kraftfahrzeug nach Anspruch 2,
**dadurch gekennzeichnet, daß**
die Schaltvorrichtung (1) ein aus Kunststoff bestehendes Gehäuse (8) aufweist und die Lasche (4) an dem Gehäuse (8) angefromt ist.

4. Kraftfahrzeug nach Anspruch 3,
**dadurch gekennzeichnet, daß**
die Lasche (4) im Querschnitt gesehen annähernd eine L-Form aufweist, wobei der Bereich (9) aus federnd elastisch verformbarem Material in einen verstärkten und rechtwinklig zu dem ersten Bereich verlaufenden Griffbereich (10) übergeht, der eine dem ersten Rastelement (3) zugeordnete Rastfläche aufweist.

5. Kraftfahrzeug nach Anspruch 4,
**dadurch gekennzeichnet, daß**
die Rastfläche mit einem Dämfungselement (11) versehen ist.

6. Kraftfahrzeug nach einem der vorhergehenden Ansprüche,
**dadurch gekennzeichnet, daß**
mehrere Arretiervorrichtungen (2) an der Schaltvorrichtung vorhanden sind, die diese auch in ihrer Lage positionieren.

7. Kraftfahrzeug nach einem der vorhergehenden Ansprüche,
**dadurch gekennzeichnet, daß**
mehrere Fixiervorrichtungen (5) an der Schaltvorrichtung (1) vorhanden sind.

8. Kraftfahrzeug nach einem der vorhergehenden Ansprüche,
**dadurch gekennzeichnet, daß**
die Buchse (6) einer jeden Fixiervorrichtung (5) begrenzt elastisch ausgeführt ist.

9. Kraftfahrzeug nach Anspruch 8,
**dadurch gekennzeichnet, daß**
die Buchse (6) einer jeden Fixiervorrichtung (5) im Querschnitt gesehen annähernd eine U-Form oder eine V-Form aufweist.

10. Kraftfahrzeug nach einem der vorhergehenden Ansprüche,
**dadurch gekennzeichnet, daß**
die Muffe (7) aus Elastomermaterial bzw. Gummi besteht oder eine Elastomer- bzw. Gummibeschichtung aufweist.

## Claims

1. Motor vehicle having, for actuation of a change gear unit, a gear shift device (1) fastened in a stationary manner in the motor vehicle, wherein the connection between the motor vehicle and the gear shift device (1) comprises a mounting,
**characterized in that**
the mounting comprises at least one locking device (2) comprising in each case a detent connection of two releasably interlocking, complementary detent elements (3, 4) and at least one fixing device (5) comprising in each case a bush (6) and a complementary sleeve (7) insertable into said bush.

2. Motor vehicle according to claim 1,
**characterized in that**
the first detent element (3) is a, viewed in cross section, wedge-shaped ramp and the second detent element (4) is a clip made of an, at least in sections, resiliently elastically deformable material.

3. Motor vehicle according to claim 2,
**characterized in that**
the gear shift device (1) has a housing (8) made of plastics material and the clip (4) is formed on the housing (8).

4. Motor vehicle according to claim 3,
**characterized in that**
the clip (4), viewed in cross section, is approximately L-shaped, wherein the region (9) made of resiliently elastically deformable material changes into a strengthened gripping region (10), which extends at right angles to the first region and has a detent face associated with the first detent element (3).

5. Motor vehicle according to claim 4,
**characterized in that**
the detent face is provided with a damping element (11).

6. Motor vehicle according to one of the preceding claims,
**characterized in that**
a plurality of locking devices (2) are provided on the gear shift device and also position the latter in its position.

7. Motor vehicle according to one of the preceding claims,
**characterized in that**
a plurality of fixing devices (5) are provided on the gear shift device (1).

8. Motor vehicle according to one of the preceding claims,
**characterized in that**
the bush (6) of each fixing device (5) is designed so as to be elastic to a limited extent.

9. Motor vehicle according to claim 8,
**characterized in that**,
viewed in cross section, the bush (6) of each fixing device (5) is approximately U- or V-shaped.

10. Motor vehicle according to one of the preceding claims,
**characterized in that**
the sleeve (7) is made of elastomer material and/or rubber or has an elastomer- and/or rubber coating.

## Revendications

1. Véhicule automobile comportant un dispositif de changement de vitesse (1) fixé en un emplacement fixe dans le véhicule automobile pour l'actionnement d'une transmission par engrenages, la liaison entre le véhicule automobile et le dispositif de changement de vitesse (1) comportant une fixation,
**caractérisé en ce que**
la fixation est constituée d'au moins un dispositif de blocage (2) avec chacun une liaison à encliquetage constituée de deux éléments d'encliquetage (3, 4) complémentaires, s'engageant l'un dans l'autre de manière séparable, et d'au moins un dispositif de fixation (5) avec chacun une douille (6) et un manchon (7) complémentaire pouvant être inséré dans cette douille.

2. Véhicule automobile selon la revendication 1,
**caractérisé en ce que**
le premier élément d'encliquetage (3) est une rampe de forme conique vue en coupe transversale et le deuxième élément d'encliquetage (4) est une patte constituée d'une matière déformable élastiquement à la manière d'un ressort, au moins par endroits.

3. Véhicule automobile selon la revendication 2,
**caractérisé en ce que**
le dispositif de changement de vitesse (1) comporte un boîtier (8) en matière plastique et la patte (4) est venue de moulage sur le boîtier (8).

4. Véhicule automobile selon la revendication 3,
**caractérisé en ce que**
la patte (4), vue en coupe transversale, présente approximativement la forme d'un L, la zone (9) en matière déformable élastiquement en faisant ressort, se prolonge par une zone de prise (10) renforcée et s'étendant à angle droit par rapport à la première zone, et présente une surface d'encliquetage associée au premier élément d'encliquetage (3).

5. Véhicule automobile selon la revendication 4,
**caractérisé en ce que**
la surface d'encliquetage est pourvue d'un élément d'amortissement (11).

6. Véhicule automobile selon l'une quelconque des revendications précédentes,
**caractérisé en ce que**
plusieurs dispositifs de blocage (2) sont prévus sur le dispositif de changement de vitesse et immobilisent aussi celui-ci dans sa position.

7. Véhicule automobile selon l'une quelconque des revendications précédentes,
**caractérisé en ce que**
plusieurs dispositifs de fixation (5) sont prévus sur le dispositif de changement de vitesse (1).

8. Véhicule automobile selon l'une quelconque des revendications précédentes,
**caractérisé en ce que**
la douille (6) de chaque dispositif de fixation (5) présente une élasticité limitée.

9. Véhicule automobile selon la revendication 8,
**caractérisé en ce que**
la douille (6) de chaque dispositif de fixation (5), vue en coupe transversale, présente approximativement la forme d'un U ou d'un V.

10. Véhicule automobile selon l'une quelconque des revendications précédentes,
**caractérisé en ce que**
le manchon (7) est en matériau élastomère ou en caoutchouc ou présente un revêtement d'élastomère ou de caoutchouc.
